(19) Europäisches Patentamt
European Patent Office
Office européen des brevets

(11) **EP 3 919 936 B1**

## (12) EUROPEAN PATENT SPECIFICATION

(45) Date of publication and mention
of the grant of the patent:
**10.01.2024   Bulletin 2024/02**

(21) Application number: **20763801.6**

(22) Date of filing: **28.02.2020**

(51) International Patent Classification (IPC):
**G01S 13/91** (2006.01)     **G01S 13/93** (2020.01)
**G01S 13/32** (2006.01)     **G01S 13/34** (2006.01)
**G01S 7/02** (2006.01)

(52) Cooperative Patent Classification (CPC):
**G01S 7/023; G01S 13/32; G01S 13/343;
G01S 13/347; G01S 13/931;** G01S 7/0232

(86) International application number:
**PCT/CN2020/077298**

(87) International publication number:
**WO 2020/173496 (03.09.2020 Gazette 2020/36)**

(54) **RADAR MEASUREMENT METHOD AND DEVICE**

RADARMESSVERFAHREN UND -VORRICHTUNG

PROCÉDÉ ET DISPOSITIF DE MESURE RADAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2019   CN 201910152524**

(43) Date of publication of application:
**08.12.2021   Bulletin 2021/49**

(73) Proprietor: **Huawei Technologies Co., Ltd.
Shenzhen, Guangdong 518129 (CN)**

(72) Inventors:
• **WAN, Lei**
  **Shenzhen, Guangdong 518129 (CN)**
• **MA, Sha**
  **Shenzhen, Guangdong 518129 (CN)**
• **WU, Yong**
  **Shenzhen, Guangdong 518129 (CN)**
• **XU, Mingxia**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**CN-A- 104 345 311       CN-A- 107 356 919
CN-A- 109 085 537       DE-A1-102017 206 944
KR-A- 20170 019 100     US-A1- 2018 321 368
US-A1- 2018 321 368**

• **JASON YU ET AL: "Multiband chirp synthesis for
frequency-hopped FMCW radar", SIGNALS,
SYSTEMS AND COMPUTERS, 2009
CONFERENCE RECORD OF THE FORTY-THIRD
ASILOMAR CONFERENCE ON, IEEE,
PISCATAWAY, NJ, USA, 1 November 2009
(2009-11-01), pages 1315-1319, XP031679466,
ISBN: 978-1-4244-5825-7**
• **SIDNEY L BORISON ET AL: "Super-Resolution
Methods for Wideband Radar", THE LINCOLN
LABORATORY JOURNAL, vol. 5, no. 3, 1 January
1992 (1992-01-01) , pages 441-461, XP055456767,**

## Description

### TECHNICAL FIELD

This application relates to the field of communications technologies, and in particular, to a radar measurement method and apparatus.

### BACKGROUND

In an advanced driving assistant system (advanced driving assistant system, ADAS), a vehicle-mounted radar mounted on a vehicle is used to sense an environment, collect data, and identify a stationary or moving object at any time in a driving process, provide raw data of calculation, analysis, and control for the ADAS, and provide a function of "eyes" for an intelligent vehicle with the driving assistant system.

The vehicle-mounted radar mainly includes a vehicle-mounted millimeter-wave radar, a vehicle-mounted laser radar, and a vehicle-mounted ultrasonic radar. Due to low costs, a relatively mature technology, and other reasons, the millimeter-wave radar becomes a main sensor of the ADAS. A main principle of the millimeter-wave radar is: The vehicle-mounted radar transmits a millimeter-wavelength electromagnetic wave to the outside. The electromagnetic wave reaches a target, and is reflected by the target to obtain an echo signal. Based on the echo signal and the transmitted electromagnetic wave, a frequency difference between the echo signal and the transmitted electromagnetic wave is obtained. For example, slopes of the echo signal and the transmitted electromagnetic wave may be the same, and the frequency difference between the echo signal and the transmitted electromagnetic wave may be referred to as an intermediate frequency IF. Based on the frequency difference between the echo signal and the transmitted electromagnetic wave, a radar measurement is performed, such as calculating a distance, a relative velocity, and a relative angle between the vehicle-mounted radar and the target.

Currently, for different ranging ranges, the vehicle-mounted millimeter-wave radar may be classified into a long range radar (long range radar, LRR) and a medium range radar (medium range radar, MRR). An operating frequency bandwidth of the long range radar LRR is usually 200 MHz to 300 MHz, and an operating frequency bandwidth of the medium range radar MRR is usually 2 GHz to 3 GHz. The medium range radar MRR consumes more frequency resources. How to reduce frequency resources consumed by the medium range radar MRR is a current research hotspot.

JASON YU ET AL: "Multiband chirp synthesis for frequency-hopped FMCW radar", SIGNALS, SYSTEMS AND COMPUTERS, 2009 CONFERENCE RECORD OF THE FORTY-THIRD ASILOMAR CONFERENCE ON, IEEE, PISCATAWAY, NJ, USA, 1 November 2009 (2009-11-01), pages 1315-1319, discloses a method to stitch together the returns from several disjoint frequency bands comprising the steps of i) correct for frequency offsets, ii) find a global AR model, iii) correct for phase offsets and iv) extrapolate and average missing areas.

DE 10 2017 206944 A1 discloses a method for operating a radar sensor in a motor vehicle, wherein the radar sensor has at least one antenna arrangement for emitting and receiving signals and a processing device for evaluating received radar signals, wherein the antenna arrangement is controlled to simultaneously emit and receive radar signals both in a far frequency range and a near frequency range, wherein the bandwidth of the near frequency range is greater than that of the far frequency range, wherein received radar signals of the near frequency range are evaluated as radar data of a higher distance resolution and received radar signals of the far frequency range are evaluated as radar data of a lower distance resolution.

Sidney L Borison ET AL: "Super-Resolution Methods for Wideband Radar", The Lincoln Laboratory Journal, vol. 5, no. 3, 1 January 1992 (1992-01-01), pages 441-461 discloses a spectral method to extrapolate signals in a radar frequency dimension in order to increase the range resolution without increasing physically the bandwidth of the transmitted signals.

US 2018/321368 A1 discloses a multi-mode radar system, radar signal processing methods and configuration methods, including using predetermined, range/mode-specific pushing windows to perform windowing on range and velocity object data before performing an FFT on the windowed object data matrix to generate a three-dimensional object matrix including range, velocity and angle data. The individual windows have an angular spectral response that corresponds to a combined angular coverage field of view of the transmit and receive antennas for the corresponding mode to minimize the total weighted energy outside the main lobe and to provide increasing spectral leakage outside the combined angular coverage field of view with angular offset from the main lobe to push out much of the spectral leakage into regions where leakage tolerance is high due to the corresponding combined angular coverage field of view of the transmit and receive antennas.

### SUMMARY

This application provides a radar measurement method and apparatus, to use a long range radar LRR signal to simulate a measurement of a medium range radar MRR.

According to a first aspect, a radar measurement method of claim 1 is provided.

In this embodiment of this application, an operating frequency bandwidth of an LRR is usually 200 MHz to 300 MHz, and an operating frequency bandwidth of the MRR is usually 2 GHz to 3 GHz. In this embodiment of this application, two LRR signals are transmitted to simulate the measurement of the MRR, to avoid transmission of the MRR. This can reduce resources consumed by radar signals. For example, the operating frequency bandwidth of the LRR is 200 MHz and the operating frequency bandwidth of the MRR is 2 GHz. It can be learned that bandwidths of the two LRR signals are 400 MHz. Compared with directly transmitting a 2 GHz MRR signal, transmitting the two LRR signals can save 2 GHz - 200 MHz x 2 = 1.6 GHz air interface resources.

Possible designs of the first aspect are disclosed in claims 2 to 7.

According to a second aspect, this application provides a radar measurement apparatus of claim 8. Possible designs of the second aspect are disclosed in claims 9 to 14.

According to a third aspect, this application provides a computer-readable storage medium of claim 15.

## BRIEF DESCRIPTION OF DRAWINGS

FIG. 1 is a schematic structural diagram of a detection system according to an embodiment of this application;
FIG. 2 is a schematic flowchart of a radar measurement method according to an embodiment of this application;
FIG. 3 is a schematic diagram of a relationship between a first LRR signal, a second LRR signal, and an MRR signal according to an embodiment of this application;
FIG. 4 is a schematic flowchart of a radar measurement method according to an embodiment of this application;
FIG. 5 is a schematic diagram of frequency compensation on an echo signal according to an embodiment of this application;
FIG. 6 is a schematic diagram of a hardware structure of a radar according to an embodiment of this application;
FIG. 7 is a schematic diagram of frequency planning according to an embodiment of this application;
FIG. 8 is another schematic diagram of frequency planning according to an embodiment of this application;
FIG. 9 is a schematic structural diagram of a radar measurement apparatus according to an embodiment of this application; and
FIG. 10 is a schematic structural diagram of a radar measurement apparatus according to an embodiment of this application.

## DESCRIPTION OF EMBODIMENTS

The following describes the technical solutions in the embodiments of this application with reference to the accompanying drawings in the embodiments of this application.

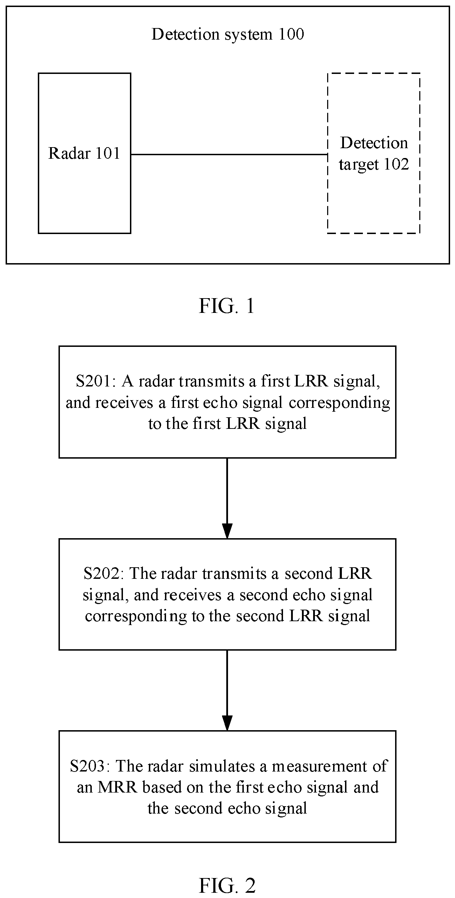

As shown in FIG. 1, a detection system 100 is provided, and includes at least a radar 101. The radar is a millimeter wave radar. Optionally, the detection system 100 may further include a detection target 102.

For example, the radar 100 may transmit a radar signal. The radar signal reaches the detection target 102, and then is reflected by the detection target 102, to form an echo signal. The radar 100 may receive the echo signal, and perform a radar measurement on the detection target based on the radar signal and the echo signal. For example, the radar 100 may perform the radar measurement based on a frequency difference between the radar signal and the echo signal. The radar measurement may include a distance measurement, a speed measurement, and an angle measurement on the detection target.

Based on the detection system 100 shown in FIG. 1, this application provides a radar measurement method and apparatus. A principle of the method is: simulating a measurement of a medium range radar (medium range radar, MRR) by using a long range radar (long range radar, LRR) signal transmitted by a radar. Because an MRR signal consumes more frequency resources, the method and apparatus in this application can reduce resources consumed by a radar signal.

As shown in FIG. 2, a procedure of a radar measurement method is provided. A radar in the procedure may be the radar 100 in FIG. 1, and the procedure may include the following steps.

S201: The radar transmits a first LRR signal, and receives a first echo signal corresponding to the first LRR signal.

In an example, the radar may include a transmit antenna and a receive antenna. The transmit antenna may transmit the first LRR signal. The first LRR signal reaches a detection target, and then is reflected by the detection target to generate the first echo signal, and the first echo signal is received by the receive antenna.

S202: The radar transmits a second LRR signal, and receives a second echo signal corresponding to the second LRR signal.

In an example, the transmit antenna of the radar may transmit the second LRR signal. The second LRR signal reaches the detection target, and then is reflected by the detection target to generate the second echo signal, and the second echo signal is received by the receive antenna.

Optionally, the first LRR signal in S201 and the second LRR signal in S202 may be generated and transmitted in adjacent time units, or the first LRR signal in S201 and the second LRR signal in S202 may be generated and transmitted in non-adjacent time units.

S203: The radar simulates a measurement of an MRR based on the first echo signal and the second echo signal.

An operating frequency bandwidth of an LRR is usually 200 MHz to 300 MHz, and an operating frequency bandwidth of the MRR is usually 2 GHz to 3 GHz. In this embodiment of this application, the two LRR signals are transmitted to simulate the measurement of the MRR, to avoid transmission of the MRR. This can reduce resources consumed by radar signals. For example, the operating frequency bandwidth of the LRR is 200 MHz and the operating frequency bandwidth of the MRR is 2 GHz. It can be learned that bandwidths of the two LRR signals are 400 MHz. Compared with directly transmitting of a 2 GHz MRR signal, transmitting the two LRR signals can save 2 GHz - 200 MHz x 2 = 1.6 GHz air interface resources.

It may be understood that a sequence of performing S201 to S203 is not limited in the procedure shown in FIG. 2. For example, in this embodiment of this application, the radar may generate and transmit the first LRR signal and the second LRR signal in adjacent time units. For example, the radar may generate and transmit the first LRR signal in a time unit T, and the radar generates and transmits the second LRR signal in a time unit T+1. Alternatively, the radar may generate and transmit the first LRR signal and the second LRR signal in non-adjacent time units.

In an example, an implementation process of S203 may include the following steps:

(1) The radar may generate an MRR signal. It should be noted that in this embodiment of this application, the radar does not transmit the MRR signal.
(2) The radar simulates, based on the MRR signal, the first LRR signal, and the first echo signal, a third echo signal corresponding to the MRR signal.

For example, the radar may determine a first frequency difference signal between the first LRR signal and the MRR signal. For example, the radar may perform frequency mixing on the first LRR signal and the MRR signal, and obtain the first frequency difference signal $\Delta f1$ between the first LRR signal and the MRR signal through a low-pass filter. For example, $\Delta f1$ may be specifically the MRR signal minus the first LRR signal, that is, $\Delta f1 = MRR$ signal - First LRR signal.

The radar may simulate, based on the first frequency difference signal and the first echo signal corresponding to the first LRR signal, the third echo signal corresponding to the MRR signal. Similarly, it can be learned from the foregoing description that "$\Delta f1 = MRR$ signal - First LRR signal", and "$MRR$ signal = $\Delta f1$ + First LRR signal" may be obtained through derivation. The first LRR signal corresponds to the first echo signal, the MRR signal may correspond to the third echo signal, and "Third echo signal = $\Delta f1$ + First echo signal" may be obtained through derivation. Optionally, in this embodiment of this application, frequency mixing may be performed on the first echo signal and $\Delta f1$, and a filter is used to obtain a signal part obtained by adding $\Delta f1$ and the first echo signal.

(3) The radar simulates, based on the MRR signal, second LRR signal, and the second echo signal, a fourth echo signal corresponding to the MRR signal.

Similarly, for example, the radar may determine a second frequency difference signal between the second LRR signal and the MRR signal. For example, the radar may perform frequency mixing on the second LRR signal and the MRR signal, and obtain the second frequency difference signal $\Delta f2$ between the second LRR signal and the MRR signal through a low-pass filter. For example, $\Delta f2$ may be specifically the second LRR signal minus the MRR signal, that is, $\Delta f2$ = Second LRR signal - MRR signal.

The radar may simulate, based on the second frequency difference signal and the second echo signal corresponding to the second LRR signal, the fourth echo signal corresponding to the MRR signal. It can be learned from the foregoing description that " $\Delta f2$ = Second LRR signal - MRR signal ", and " $MRR$ signal = Second LRR signal - $\Delta f2$" may be obtained through derivation. The second LRR signal corresponds to the second echo signal, the MRR signal may correspond to the fourth echo signal, and " Fourth echo signal = Second echo signal - $\Delta f2$" may be obtained through derivation. Optionally, in this embodiment of this application, frequency mixing may be performed on the second echo signal and $\Delta f2$, and a filter is used to obtain a signal part obtained by subtracting $\Delta f2$ from the second echo signal.

(4) The radar simulates the measurement of the medium range radar MRR based on the third echo signal and the fourth echo signal.

For example, the radar may determine a frequency difference, namely, a first intermediate frequency, between the MRR signal and the third echo signal based on the MRR signal and the third echo signal, and determine a frequency difference, namely, a second intermediate frequency, between the MRR signal and the fourth echo signal based on the MRR signal and the fourth echo signal. Finally, a radar measurement is performed based on the first intermediate frequency and the second intermediate frequency.

For example, the radar may obtain a first radar measurement result based on the first intermediate frequency, obtain a second radar measurement result based on the second intermediate frequency, and finally, obtain a final radar measurement result based on the first radar measurement result and the second radar measurement result. Alternatively, the radar may obtain a third intermediate frequency based on the first intermediate frequency and the second intermediate frequency. For example, the third intermediate frequency may be an average intermediate frequency of the first intermediate frequency and the second intermediate frequency. A final radar measurement result is obtained based on the third intermediate frequency.

It should be noted that, in this embodiment of this application, in the descriptions of this application, the terms "first", "second" and the like are only used for a purpose of description, and cannot be understood as indicating or implying relative importance or a sequence. The descriptions of (1), (2), (3), and (4) are merely for ease of description, and are not intended to limit this application. A sequence of (1), (2), (3), and (4) is not limited in this embodiment of this application.

This application further provides a method for determining a frequency span between two LRR signals in a scenario in which a measurement of an MRR is simulated by using two LRR signals. The method includes: A radar simulates the measurement of the MRR based on a first LRR signal and a second LRR signal. A frequency span $\Delta F$ between the first LRR signal and the second LRR signal is greater than or equal to an operating frequency bandwidth of an MRR signal. For example, the operating frequency bandwidth of the MRR signal is 2 GHz, and the frequency span $\Delta F$ between the first LRR signal and the second LRR signal is greater than or equal to 2 GHz. It may be understood that the measurement of the MRR may be simulated by using the method disclosed in FIG. 2, or the measurement of the MRR may be simulated by using another method. This is not limited in this embodiment of this application.

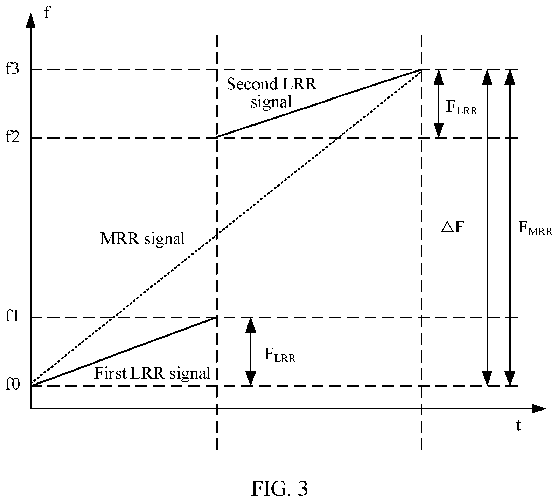

For example, as shown in FIG. 3, a start frequency of the first LRR signal may be represented as $f_0$, and an end frequency of the first LRR signal may be represented as $f_1$. A start frequency of the second LRR signal may be represented as $f_2$, and an end frequency of the second LRR signal may be represented as $f_3$. The frequency span between the first LRR signal and the second LRR signal may be represented as $\Delta F$, and the frequency span $\Delta F$ between the first LRR signal and the second LRR signal may meet the following formula:

$$\Delta F = max(f_0, f_1, f_2, f_3) - min(f_0, f_1, f_2, f_3)$$

Further, in the example shown in FIG. 3, operating frequency bandwidths of the first LRR signal and the second LRR signal are represented as $F_{LRR}$, the operating frequency bandwidth of the MRR signal is represented as $F_{MRR}$, and the frequency span between the first LRR signal and the second LRR signal is represented as $\Delta F$. It may be understood that, in the example shown in FIG. 3, an example in which the frequency span $\Delta F$ between the first LRR signal and the second LRR signal equals to the operating frequency bandwidth of the MRR signal is used for description. This is not intended to limit this application. Optionally, the operating frequency bandwidth in this embodiment of this application may also be referred to as a scanning frequency bandwidth.

The first LRR signal and the second LRR signal are sawtooth waves with linear increase in frequency. Optionally, the frequency span $\Delta F$ between the first LRR signal and the second LRR signal meets the following formula:

$$\Delta F = max(f_1, f_3) - min(f_0, f_2)$$

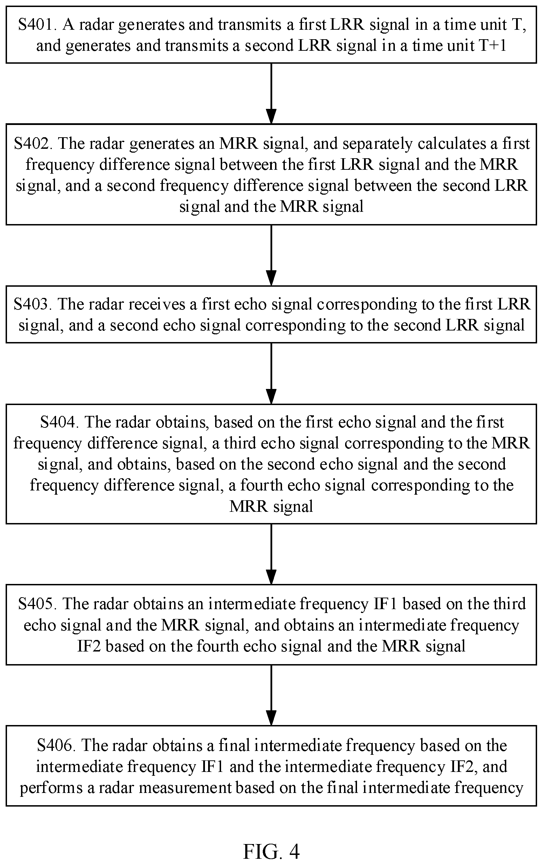

As shown in FIG. 4, a procedure of a radar measurement method according to the invention is provided. In the procedure, an example in which a first LRR signal is generated and transmitted in a time unit T, and a second LRR signal is generated and transmitted in a time unit T+1 is used for description. The procedure includes the following steps.

S401: A radar generates and transmits the first LRR signal in the time unit T, and generates and transmits the second LRR signal in the time unit T+1.

S402: The radar generates an MRR signal, and separately calculates a first frequency difference signal $\Delta f1$ between the first LRR signal and the MRR signal, and a second frequency difference signal $\Delta f2$ between the second LRR signal and the MRR signal. For a process of calculating the first frequency difference signal $\Delta f1$ and the second frequency difference signal $\Delta f2$, refer to the description in the foregoing procedure shown in FIG. 2. Details are not described herein again.

S403: The radar receives a first echo signal corresponding to the first LRR signal and a second echo signal corresponding to the second LRR signal.

S404: The radar obtains, based on the first echo signal and the first frequency difference signal $\Delta f1$, a third echo signal corresponding to the MRR signal, and obtains, based on the second echo signal and the second frequency difference signal $\Delta f2$, a fourth echo signal corresponding to the MRR signal. Optionally, in this embodiment of this application, the third echo signal may also be referred to as a first echo signal that is obtained after frequency compensation, and the fourth echo signal may also be referred to as a second echo signal that is obtained after frequency compensation. For a process of obtaining the third echo signal and the fourth echo signal, refer to the description in the procedure shown in FIG. 2. Details are not described herein again.

S405: The radar obtains an intermediate frequency IF1 based on the third echo signal and the MRR signal, and obtains an intermediate frequency IF2 based on the fourth echo signal and the MRR signal.

For example, the radar may perform frequency mixing on the third echo signal and the MRR signal, and obtain the intermediate frequency IF 1 through a low-pass filter. The radar may perform frequency mixing on the fourth echo signal and the MRR signal, and obtain the intermediate frequency IF2 through a low-pass filter.

S406: The radar obtains a final intermediate frequency based on the intermediate frequency IF1 and the intermediate frequency IF2, and performs a radar measurement based on the final intermediate frequency.

For example, the radar may average the IF1 and the IF2 to obtain the final intermediate frequency. The radar measurement includes a radar-based distance measurement, a radar-based speed measurement, a radar-based angle measurement, and the like.

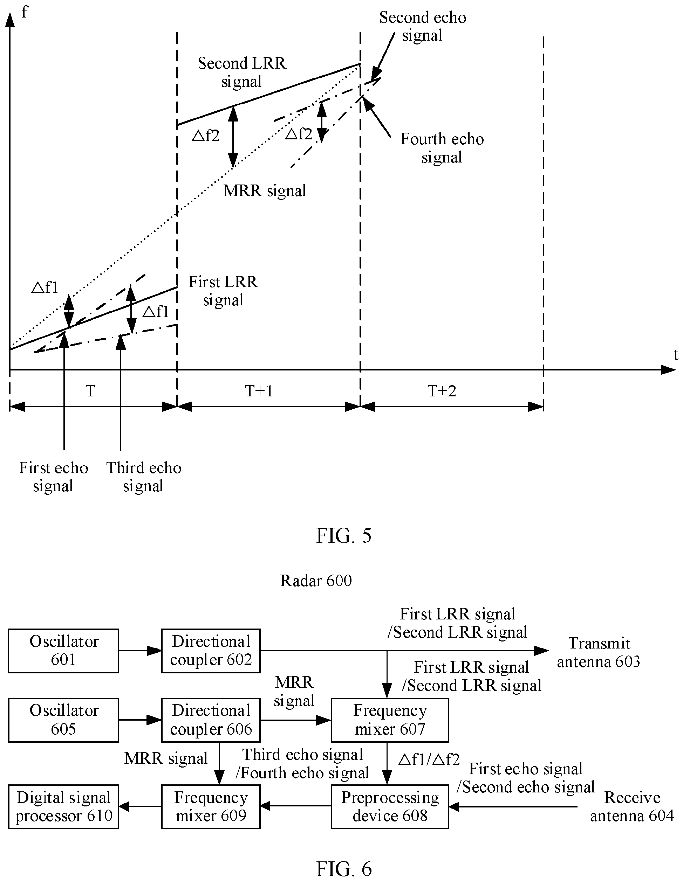

For example, with reference to a schematic diagram shown in FIG. 5, the following describes in detail the method in the procedure shown in FIG. 4. As shown in FIG. 5, the radar may generate and transmit the first LRR signal in the time unit T, and generate and transmit the second LRR signal in the time unit T+1. The radar receives the first echo signal corresponding to the first LRR signal and the second echo signal corresponding to the second LRR signal. The radar generates the MRR signal, but does not transmit the MRR signal. It may be understood that a time unit for generating the MRR signal is not limited in this embodiment of this application. In the example shown in FIG. 5, an example in which the MRR signal is generated in the time unit T or the time unit T+1 is used for description. This imposes no limitation on this application. In addition, in this embodiment of this application, time units for receiving the first echo signal and the second echo signal are not limited. In the example shown in FIG. 5, an example in which the first echo signal is received in the time unit T, and the second echo signal is received in the time units T+1 and T+2 is used for description. This imposes no limitation on this application. A process according to the invention is as follows:
The radar determines the first frequency difference signal $\Delta f1$ between the first LRR signal and the MRR signal. The radar performs frequency compensation on the received first echo signal based on the first frequency difference signal $\Delta f1$, to obtain the third echo signal corresponding to the virtually transmitted MRR signal.

The radar determines the second frequency difference signal $\Delta f2$ between the second LRR signal and the MRR signal. The radar performs frequency compensation on the received second echo signal based on the second frequency difference signal $\Delta f1$, to obtain the fourth echo signal corresponding to the virtually transmitted MRR signal.

The radar obtains the intermediate frequency IF1 based on a frequency difference between the MRR signal and the third echo signal, and obtains the intermediate frequency IF2 based on a frequency difference between the MRR signal and the fourth echo signal. Finally, a radar measurement is performed based on the IF1 and the IF2.

It may be understood that, according to the invention, to improve accuracy of the radar measurement, two LRR signals are set: the first LRR signal and the second LRR signal, a measurement of the MRR signal is simulated. Another solution, which is not according to the invention and is present for illustration purposes only, may be :
: The radar generates and transmits an LRR signal, and receives an echo signal corresponding to the LRR signal. The radar generates an MRR signal, but does not transmit the MRR signal. The radar obtains a frequency difference signal $\Delta f$ between the LRR signal and the MRR signal. The radar performs, based on the frequency difference signal $\Delta f$, frequency compensation on the echo signal corresponding to the LRR signal, to obtain an echo signal corresponding to the MRR signal. Finally, a radar measurement is performed based on the MRR signal and the echo signal corresponding to the MRR signal.

For the radar shown in FIG. 1, FIG. 2 or FIG. 4, as shown in FIG. 6, a specific hardware implementation of a radar 600 is provided, and includes:
an oscillator 601 and a directional coupler 602, configured to generate a first LRR signal and a second LRR signal; a transmit antenna 603, configured to transmit the first LRR signal and the second LRR signal; a receive antenna 604, configured to receive a first echo signal corresponding to the first LRR signal and a second echo signal corresponding to the second LRR signal; an oscillator 605 and a directional coupler 606, configured to generate an MRR signal; a frequency mixer 607, configured to perform frequency mixing on the first LRR signal and the MRR signal, to obtain a first frequency difference signal $\Delta f1$, and perform frequency mixing on the second LRR signal and the MRR signal, to obtain a second frequency difference signal $\Delta f2$; a preprocessing device 608, configured to perform frequency compensation on the first echo signal based on the first frequency difference signal $\Delta f1$, to obtain a third echo signal corresponding to the MRR signal, and perform frequency compensation on the second echo signal based on the second frequency difference signal $\Delta f2$, to obtain a fourth echo signal corresponding to the MRR signal; a frequency mixer 609, configured to perform frequency mixing on the MRR signal and the third echo signal, to simulate a first intermediate frequency of the MRR signal (namely, the foregoing process of obtaining the intermediate frequency IF1), and perform frequency mixing on the MRR signal and the fourth echo signal, to simulate a second intermediate frequency of the MRR signal (namely, the foregoing process of obtaining the intermediate frequency IF2); and a digital signal processor 610, configured to simulate a measurement result of the MRR based on the first intermediate frequency and the second intermediate frequency.

It may be understood that the example shown in FIG. 6 is merely an example of a hardware structure of the radar 600. This imposes no limitation on the hardware structure of the radar. For example, in the example shown in FIG. 6, functions of the oscillator 601 and the oscillator 605 may be implemented by one oscillator, or may be implemented by two oscillators. In the example shown in FIG. 6, descriptions are provided by using two oscillators to implement the functions of the oscillator 601 and the oscillator 605. For another example, functions of the frequency mixer 607 and the frequency mixer 609 may be implemented by one frequency mixer, or may be implemented by two frequency mixers. In the example shown in FIG. 6, descriptions are provided by using two oscillators to implement the functions of the frequency mixer 607 and the frequency mixer 609. For another example, a function of the preprocessing device 608 may be independently implemented by the preprocessing device 608, or may be implemented by the digital signal processor 610. In the example shown in FIG. 6, descriptions are provided by using an example in which the preprocessing device 608 independently implements the function of frequency compensation.

It can be learned from the foregoing description that according to the method of this application, a measurement of the MRR signal is simulated by using two LRR signals. Transmission of the MRR signal in the air can be reduced, and less frequency resources are occupied. The saved frequency resources may be used by more LRR radars.

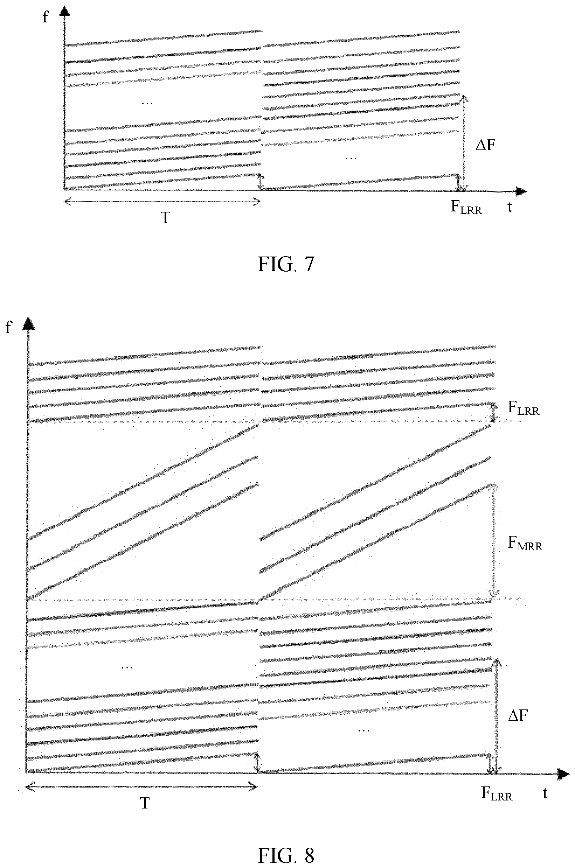

In an example, as shown in FIG. 7, each available frequency bands of a radar may be planned as frequency resources of an LRR signal, but no available frequency band of a radar is planned as frequency resources of an MRR signal. As shown in FIG. 7, for adjacent time units T and T+1, resources of two signal waveforms with a frequency span of $\Delta F$ may be allocated to a radar to simulate an estimated measurement of an MRR.

In an example, as shown in FIG. 8, a small quantity of available frequency bands of a radar may be planned as frequency resources of an MRR signal. Some radars may perform an estimated measurement of an MRR by using the MRR signal. Some radars may combine two LRR signals to perform an estimated measurement of the MRR signal. For the radars that combine two LRR signals to perform the estimated measurement of the MRR signal, a frequency span of the two LRR signals needs to be greater than or equal to $\Delta F$.

In the foregoing example, in the available frequency bands of the radar, no available frequency band of the MRR is planned, or only some available frequency bands of the MRR are planned, so that the same frequency resource may be used by more radars without interference or with small interference.

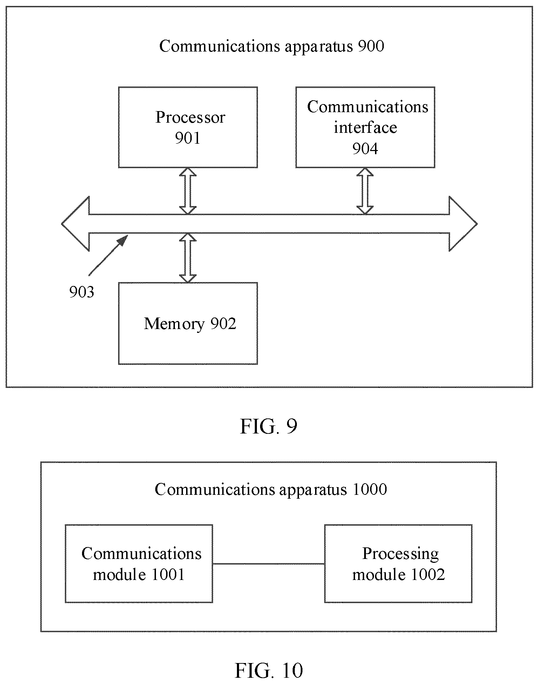

Same as the foregoing concept, as shown in FIG. 9, a radar measurement apparatus 900 is provided, and the radar measurement apparatus 900 may be applied to the radar described in the foregoing embodiments.

The radar measurement apparatus 900 may include a processor 901 and a memory 902. Further, the apparatus may further include a communications interface 904, and the communications interface may include a transmitting interface and a receiving interface. Further, the apparatus may further include a bus system 903.

The processor 901, the memory 902, and the communications interface 904 may be connected through the bus system 903. The memory 902 may be configured to store instructions, and the processor 901 is configured to execute the instructions stored in the memory 902, to control the communications interface 904 to receive or transmit a signal, to complete the steps performed by the radar in the foregoing embodiments. For example, the memory 902 may be integrated into the processor 901, or may be integrated into a different physical entity from the processor 901. For example, a function of the communications interface 904 may be implemented through a transceiver circuit or a transceiver-dedicated chip. It may be considered that the processor 901 may be implemented by using a dedicated processing chip, a processing circuit, a processor, or a general-purpose chip. Alternatively, a computer may be used to implement a function of the radar provided in this embodiment of this application. That is, program code for implementing functions of the processor 901 and the communications interface 904 is stored in the memory 902, and a general-purpose processor may implement functions of the processor 904 and the communications interface 904 by executing the code in the memory.

In an example, the communications interface 904 may be configured to: transmit a first LRR signal, receive a first echo signal corresponding to the first LRR signal, transmit a second LRR signal, and receive a second echo signal corresponding to the second LRR signal. The processor 901 is configured to simulate a measurement of an MRR based on the first echo signal and the second echo signal.

For specific function descriptions of the processor 901 and the communications interface 904, refer to the descriptions of the foregoing method embodiments. Details are not described herein again.

Same as the foregoing concept, as shown in FIG. 10, a radar measurement apparatus 1000 is provided, and the radar measurement apparatus 1000 includes a communications module 1001 and a processing module 1002.

In an example, the communications module 1001 is configured to: transmit a first LRR signal, receive a first echo signal corresponding to the first LRR signal, transmit a second LRR signal, and receive a second echo signal corresponding to the second LRR signal. The processing module 1002 is configured to simulate a measurement of an MRR based on the first echo signal and the second echo signal.

For descriptions of functions of the communications module 1001 and the processing module 1002, refer to descriptions of the foregoing method embodiments. Details are not described herein again.

According to another aspect, this application provides a computer-readable storage medium. The storage medium stores a software program, and when the software program is read and executed by one or more processors, the method provided in any one or more of the foregoing embodiments may be implemented. The computer storage medium may include: any medium that can store program code, such as a USB flash drive, a removable hard disk, a read-only memory, a random access memory, a magnetic disk, or an optical disc.

Based on the foregoing embodiments, the embodiments of this application further provide a computer program. The computer program includes computer instructions, and when the computer instructions are executed by a computer, the computer is enabled to perform the method provided in any one or more of the foregoing embodiments.

Based on the foregoing embodiments, the embodiments of this application further provide a chip. The chip includes a processor, configured to implement a function in any one or more of the foregoing embodiments, for example, obtain or process information or a message in the foregoing methods. Optionally, the chip further includes a memory. The memory is configured to store program instructions and data that are executed by the processor. The chip may also include a chip and another discrete component.

It should be understood that, the processor in the embodiments of this application may be a central processing unit (Central Processing Unit, CPU), or may be another general purpose processor, a digital signal processor (digital signal processor, DSP), an application-specific integrated circuit (application specific integrated circuit, ASIC), a field programmable gate array (field programmable gate array, FPGA), or another programmable logic device, a transistor logic device, a discrete hardware component, or the like. The general purpose processor may be a microprocessor or any conventional processor or the like.

The memory may include a read-only memory and a random access memory, and provide instructions and data to the processor. A part of the memory may further include a non-volatile random access memory.

The bus system may further include a power bus, a control bus, a status signal bus, and the like, in addition to a data bus. However, for clear description, various types of buses in the figure are marked as the bus system. In an implementation process, steps in the foregoing methods may be implemented by using a hardware integrated logical circuit in the processor, or by using instructions in a form of software. The steps of the method disclosed with reference to the embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

In the embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It may be understood that various numbers in the embodiments of this application are merely used for differentiation for ease of description, and are not used to limit the scope of the embodiments of this application. Sequence numbers of the foregoing processes do not mean execution sequences. The execution sequences of the processes should be determined based on functions and internal logic of the processes.

**Claims**

1. A radar measurement method, comprising:

   transmitting, by a radar, a first long range radar, LRR, signal, and receiving a first echo signal corresponding to the first LRR signal;
   transmitting, by the radar, a second LRR signal, and receiving a second echo signal corresponding to the second LRR signal, wherein the first LRR signal and the second LRR signal are sawtooth waves with linear increase in frequency; and
   simulating, by the radar, a measurement of a medium range radar, MRR, based on the first echo signal and the second echo signal, wherein the radar generates the MRR signal, and separately calculates a first frequency difference signal ($\Delta f1$) between the first LRR signal and the MRR signal, and a second frequency difference signal ($\Delta f2$) between the second LRR signal and the MRR signal,
   obtaining, by the radar, based on the first echo signal and the first frequency difference signal ($\Delta f1$), a third echo signal corresponding to the MRR signal, and obtaining based on the second echo signal and the second difference signal ($\Delta f2$), a fourth echo signal corresponding to the MRR signal,
   obtaining an intermediate frequency IF1 based on the third echo signal and the MRR signal, and obtaining an intermediate frequency IF2 based on the fourth echo signal and the MRR signal;
   obtaining, by the radar, a final intermediate frequency based on the IF1 and the IF2, and performing a radar measurement based on the final intermediate frequency, wherein
   a frequency span ($\Delta F$) between the first LRR signal and the second LRR signal is greater than or equal to an operating frequency bandwidth of an MRR signal.

2. The method according to claim 1, wherein the simulating, by the radar, a measurement of a medium range radar, MRR based on the first echo signal and the second echo signal comprises:

generating, by the radar, an MRR signal;
simulating, by the radar based on the MRR signal, the first LRR signal, and the first echo signal, the third echo signal corresponding to the MRR signal;
simulating, by the radar based on the MRR signal, the second LRR signal, and the second echo signal, the fourth echo signal corresponding to the MRR signal; and
simulating, by the radar, the measurement of the medium range radar MRR based on the third echo signal and the fourth echo signal.

3. The method according to claim 2, wherein the simulating, by the radar based on the MRR signal, the first LRR signal, and the first echo signal, a third echo signal corresponding to the MRR signal comprises:

determining, by the radar, the first frequency difference signal of the first LRR signal and the MRR signal; and
simulating, by the radar based on the first frequency difference signal and the first echo signal, the third echo signal corresponding to the MRR signal.

4. The method according to claim 2, wherein the simulating, by the radar based on the MRR signal, the second LRR signal, and the second echo signal, the fourth echo signal corresponding to the MRR signal comprises:

determining, by the radar, the second frequency difference signal of the MRR signal and the second LRR signal; and
simulating, by the radar based on the second frequency difference signal and the second echo signal, the fourth echo signal corresponding to the MRR signal.

5. The method according to any one of claims 2 to 4, wherein the simulating, by the radar, the measurement of the medium range radar, MRR based on the third echo signal and the fourth echo signal comprises:

determining, by the radar, a first intermediate frequency based on the MRR signal and the third echo signal, wherein the first intermediate frequency is a frequency difference between the MRR signal and the third echo signal;
determining, by the radar, a second intermediate frequency based on the MRR signal and the fourth echo signal, wherein the second intermediate frequency is a frequency difference between the MRR signal and the fourth echo signal; and
performing, by the radar, a radar measurement based on the first intermediate frequency and the second intermediate frequency.

6. The method according to any one of claims 1 to 5, wherein the frequency span between the first LRR signal and the second LRR signal meets the following formula:

$$\Delta F = max(f_0, f_1, f_2, f_3) - min(f_0, f_1, f_2, f_3)$$

$\Delta F$ represents the frequency span between the first LRR signal and the second LRR signal, $f_0$, $f_1$ respectively represent a start frequency and an end frequency of the first LRR signal, and $f_2$, $f_3$ respectively represent a start frequency and an end frequency of the second LRR signal.

7. The method according to any one of claims 1 to 5, wherein the frequency span between the first LRR signal and the second LRR signal meets the following formula:

$$\Delta F = max(f_1, f_3) - min(f_0, f_2)$$

$\Delta F$ represents the frequency span between the first LRR signal and the second LRR signal, $f_0$, $f_1$ respectively represent a start frequency and an end frequency of the first LRR signal, and $f_2$, $f_3$ respectively represent a start frequency and an end frequency of the second LRR signal.

8. A radar measurement apparatus, comprising:

a communications module, configured to transmit a first long range radar, LRR signal, and receive a first echo signal corresponding to the first LRR signal, wherein
the communications module is further configured to transmit a second LRR signal, and receive a second echo signal corresponding to the second LRR signal, wherein the first LRR signal and the second LRR signal are sawtooth waves with linear increase in frequency; and a processing module, configured to simulate a measurement of a medium range radar, MRR based on the first echo signal and the second echo signal, wherein the radar is configured to generate the MRR signal, and separately calculate a first frequency difference signal ($\Delta f1$) between the first LRR signal and the MRR signal, and a second frequency difference signal ($\Delta f2$) between the second LRR signal and the MRR signal, wherein
the radar is configured to obtain, based on the first echo signal and the first frequency difference signal ($\Delta f1$), a third echo signal corresponding to the MRR signal, and to obtain, based on the second echo signal and the second difference signal ($\Delta f_2$), a fourth echo signal corresponding to the MRR signal,
the radar is configured to obtain an intermediate frequency IF1 based on the third echo signal and the MRR signal, and to obtain an intermediate frequency IF2 based on the fourth echo signal and the MRR signal, and
the radar is configured to obtain a final intermediate frequency based on the IF1 and the IF2, and configured to perform a radar measurement based on the final intermediate frequency, wherein
a frequency span between the first LRR signal and the second LRR signal is greater than or equal to an operating frequency bandwidth of an MRR signal.

9. The apparatus according to claim 8, wherein the processing module is configured to:

generate an MRR signal;
simulate, based on the MRR signal, the first LRR signal, and the first echo signal, the third echo signal corresponding to the MRR signal;
simulate, based on the MRR signal, the second LRR signal, and the second echo signal, the fourth echo signal corresponding to the MRR signal; and
simulate the measurement of the medium range radar MRR based on the third echo signal and the fourth echo signal.

10. The apparatus according to claim 9, wherein the processing module is configured to:

determine the first frequency difference signal between the first LRR signal and the MRR signal; and
simulate, based on the first frequency difference signal and the first echo signal, the third echo signal corresponding to the MRR signal.

11. The apparatus according to claim 9, wherein the processing module is configured to:

determine the second frequency difference signal between the MRR signal and the second LRR signal; and
simulate, based on the second frequency difference signal and the second echo signal, the fourth echo signal corresponding to the MRR signal.

12. The apparatus according to any one of claims 9 to 11, wherein the processing module is configured to:

determine the first intermediate frequency based on the MRR signal and the third echo signal, wherein the first intermediate frequency is a frequency difference between the MRR signal and the third echo signal;
determine the second intermediate frequency based on the MRR signal and the fourth echo signal, wherein the second intermediate frequency is a frequency difference between the MRR signal and the fourth echo signal; and
perform a radar measurement based on the first intermediate frequency and the second intermediate frequency.

13. The apparatus according to any one of claims 8 to 12, wherein the frequency span between the first LRR signal and the second LRR signal meets the following formula:

$$\Delta F = max(f_0, f_1, f_2, f_3) - min(f_0, f_1, f_2, f_3)$$

$\Delta F$ represents the frequency span between the first LRR signal and the second LRR signal, $f_0$, $f_1$ respectively represent a start frequency and an end frequency of the first LRR signal, and $f_2$, $f_3$ respectively represent a start frequency and an end frequency of the second LRR signal.

14. The apparatus according to any one of claims 8 to 12, wherein the frequency span between the first LRR signal and the second LRR signal meets the following formula:

$$\Delta F = max(f_1, f_3) - min(f_0, f_2)$$

$\Delta F$ represents the frequency span between the first LRR signal and the second LRR signal, $f_0$, $f_1$ respectively represent a start frequency and an end frequency of the first LRR signal, and $f_2$, $f_3$ respectively represent a start frequency and an end frequency of the second LRR signal.

15. A computer-readable storage medium, wherein the storage medium stores computer instructions, and when the computer instructions are executed by a computer, the computer is enabled to perform the method according to any one of claims 1 to 7 when coupled to an apparatus according to any one of claims 8 to 14.


**Patentansprüche**

1. Radarmessverfahren, das Folgendes umfasst:

   Senden, durch einen Radar, eines ersten Fernbereichsradar- bzw. LRR-Signals und Empfangen eines ersten Echosignals entsprechend dem ersten LRR-Signal;
   Senden, durch den Radar, eines zweiten LRR-Signals und Empfangen eines zweiten Echosignals entsprechend dem zweiten LRR-Signal, wobei das erste LRR-Signal und das zweite LRR-Signal Sägezahnschwingungen mit linearer Erhöhung der Frequenz sind; und
   Simulieren, durch den Radar, einer Messung eines Mittelbereichsradars, MRR, basierend auf dem ersten Echosignal und dem zweiten Echosignal, wobei der Radar das MRR-Signal erzeugt und ein erstes Frequenzdifferenzsignal ($\Delta f_1$) zwischen dem ersten LRR-Signal und dem MRR-Signal und ein zweites Frequenzdifferenzsignal ($\Delta f_2$) zwischen dem zweiten LRR-Signal und dem MRR-Signal getrennt berechnet, Erhalten, durch den Radar, basierend auf dem ersten Echosignal und dem ersten Frequenzdifferenzsignal ($\Delta f_1$), eines dritten Echosignals entsprechend dem MRR-Signal, und Erhalten, basierend auf dem zweiten Echosignal und dem zweiten Differenzsignal ($\Delta f_2$), eines vierten Echosignals entsprechend dem MRR-Signal,
   Erhalten einer Zwischenfrequenz IF1 basierend auf dem dritten Echosignal und dem MRR-Signal, und Erhalten einer Zwischenfrequenz IF2 basierend auf dem vierten Echosignal und dem MRR-Signal;
   Erhalten, durch den Radar, einer abschließenden Zwischenfrequenz basierend auf IF1 und IF2, und Durchführen einer Radarmessung basierend auf der abschließenden Zwischenfrequenz, wobei
   eine Frequenzspanne ($\Delta F$) zwischen dem ersten LRR-Signal und dem zweiten LRR-Signal größer als oder gleich einer Betriebsfrequenzbandbreite eines MRR-Signals ist.

2. Verfahren nach Anspruch 1, wobei das Simulieren, durch den Radar, einer Messung eines Mittelbereichsradars, MRR, basierend auf dem ersten Echosignal und dem zweiten Echosignal Folgendes umfasst:

   Erzeugen, durch den Radar, eines MRR-Signals;
   Simulieren, durch den Radar, basierend auf dem MRR-Signal, dem ersten LRR-Signal und dem ersten Echosignal, des dritten Echosignals entsprechend dem MRR-Signal;
   Simulieren, durch den Radar, basierend auf dem MRR-Signal, dem zweiten LRR-Signal und dem zweiten Echosignal, des vierten Echosignals entsprechend dem MRR-Signal; und
   Simulieren, durch den Radar, der Messung des Mittelbereichsradars, MRR, basierend auf dem dritten Echosignal und dem vierten Echosignal.

3. Verfahren nach Anspruch 2, wobei das Simulieren, durch den Radar, basierend auf dem MRR-Signal, dem ersten LRR-Signal und dem ersten Echosignal, eines dritten Echosignals entsprechend dem MRR-Signal Folgendes umfasst:

   Bestimmen, durch den Radar, des ersten Frequenzdifferenzsignals des ersten LRR-Signals und des MRR-Signals; und

Simulieren, durch den Radar, basierend auf dem ersten Frequenzdifferenzsignal und dem ersten Echosignal, des dritten Echosignals entsprechend dem MRR-Signal.

4. Verfahren nach Anspruch 2, wobei das Simulieren, durch den Radar, basierend auf dem MRR-Signal, dem zweiten LRR-Signal und dem zweiten Echosignal, des vierten Echosignals entsprechend dem MRR-Signal Folgendes umfasst:

Bestimmen, durch den Radar, des zweiten Frequenzdifferenzsignals des MRR-Signals und des zweiten LRR-Signals, und

Simulieren, durch den Radar, basierend auf dem zweiten Frequenzdifferenzsignal und dem zweiten Echosignal, des vierten Echosignals entsprechend dem MRR-Signal.

5. Verfahren nach einem der Ansprüche 2 bis 4, wobei das Simulieren, durch den Radar, der Messung des Mittelbereichsradars, MRR, basierend auf dem dritten Echosignal und dem vierten Echosignal Folgendes umfasst:

Bestimmen, durch den Radar, einer ersten Zwischenfrequenz basierend auf dem MRR-Signal und dem dritten Echosignal, wobei die erste Zwischenfrequenz eine Frequenzdifferenz zwischen dem MRR-Signal und dem dritten Echosignal ist;

Bestimmen, durch den Radar, einer zweiten Zwischenfrequenz basierend auf dem MRR-Signal und dem vierten Echosignal, wobei die zweite Zwischenfrequenz eine Frequenzdifferenz zwischen dem MRR-Signal und dem vierten Echosignal ist; und

Durchführen, durch den Radar, einer Radarmessung basierend auf der ersten Zwischenfrequenz und der zweiten Zwischenfrequenz.

6. Verfahren nach einem der Ansprüche 1 bis 5, wobei die Frequenzspanne zwischen dem ersten LRR-Signal und dem zweiten LRR-Signal die folgende Formel erfüllt:

$$\Delta F = max(f_0, f_1, f_2, f_3) - min(f_0, f_1, f_2, f_3)$$

$\Delta F$ repräsentiert die Frequenzspanne zwischen dem ersten LRR-Signal und dem zweiten LRR-Signal, $f_0$, $f_1$ repräsentieren eine Startfrequenz bzw. eine Endfrequenz des ersten LRR-Signals, und $f_2$, $f_3$ repräsentieren eine Startfrequenz bzw. eine Endfrequenz des zweiten LRR-Signals.

7. Verfahren nach einem der Ansprüche 1 bis 5, wobei die Frequenzspanne zwischen dem ersten LRR-Signal und dem zweiten LRR-Signal die folgende Formel erfüllt:

$$\Delta F = max(f_1, f_3) - min(f_0, f_2)$$

$\Delta F$ repräsentiert die Frequenzspanne zwischen dem ersten LRR-Signal und dem zweiten LRR-Signal, $f_0$, $f_1$ repräsentieren eine Startfrequenz bzw. eine Endfrequenz des ersten LRR-Signals, und $f_2$, $f_3$ repräsentieren eine Startfrequenz bzw. eine Endfrequenz des zweiten LRR-Signals.

8. Radarmessvorrichtung, die Folgendes umfasst:

ein Kommunikationsmodul, ausgelegt zum Senden eines ersten Fernbereichsradar- bzw. LRR-Signals und Empfangen eines ersten Echosignals entsprechend dem ersten LRR-Signal, wobei

das Kommunikationsmodul ferner ausgelegt ist zum Senden eines zweiten LRR-Signals und Empfangen eines zweiten Echosignals entsprechend dem zweiten LRR-Signal, wobei das erste LRR-Signal und das zweite LRR-Signal Sägezahnschwingungen mit linearer Erhöhung der Frequenz sind; und

ein Verarbeitungsmodul, ausgelegt zum Simulieren einer Messung eines Mittelbereichsradars, MRR, basierend auf dem ersten Echosignal und dem zweiten Echosignal, wobei der Radar ausgelegt ist zum Erzeugen des MRR-Signals und getrennten Berechnen eines ersten Frequenzdifferenzsignals ($\Delta f_1$) zwischen dem ersten LRR-Signal und dem MRR-Signal und eines zweiten Frequenzdifferenzsignals ($\Delta f_2$) zwischen dem zweiten LRR-Signal und dem MRR-Signal, wobei

der Radar ausgelegt ist zum Erhalten, basierend auf dem ersten Echosignal und dem ersten Frequenzdiffe-

renzsignal ($\Delta f_1$), eines dritten Echosignals entsprechend dem MRR-Signal, und Erhalten, basierend auf dem zweiten Echosignal und dem zweiten Differenzsignal ($\Delta f_2$), eines vierten Echosignals entsprechend dem MRR-Signal,

der Radar ausgelegt ist zum Erhalten einer Zwischenfrequenz IF1 basierend auf dem dritten Echosignal und dem MRR-Signal, und Erhalten einer Zwischenfrequenz IF2 basierend auf dem vierten Echosignal und dem MRR-Signal; und

der Radar ausgelegt ist zum Erhalten einer abschließenden Zwischenfrequenz basierend auf IF1 und IF2, und ausgelegt ist zum Durchführen einer Radarmessung basierend auf der abschließenden Zwischenfrequenz, wobei

eine Frequenzspanne zwischen dem ersten LRR-Signal und dem zweiten LRR-Signal größer als oder gleich einer Betriebsfrequenzbandbreite eines MRR-Signals ist.

9. Vorrichtung nach Anspruch 8, wobei das Verarbeitungsmodul ausgelegt ist zum:

Erzeugen eines MRR-Signals;

Simulieren, basierend auf dem MRR-Signal, dem ersten LRR-Signal und dem ersten Echosignal, des dritten Echosignals entsprechend dem MRR-Signal;

Simulieren, basierend auf dem MRR-Signal, dem zweiten LRR-Signal und dem zweiten Echosignal, des vierten Echosignals entsprechend dem MRR-Signal; und

Simulieren der Messung des Mittelbereichsradars, MRR, basierend auf dem dritten Echosignal und dem vierten Echosignal.

10. Vorrichtung nach Anspruch 9, wobei das Verarbeitungsmodul ausgelegt ist zum:

Bestimmen des ersten Frequenzdifferenzsignals zwischen dem ersten LRR-Signal und dem MRR-Signal; und

Simulieren, basierend auf dem ersten Frequenzdifferenzsignal und dem ersten Echosignal, des dritten Echosignals entsprechend dem MRR-Signal.

11. Vorrichtung nach Anspruch 9, wobei das Verarbeitungsmodul ausgelegt ist zum:

Bestimmen des zweiten Frequenzdifferenzsignals zwischen dem MRR-Signal und dem zweiten LRR-Signal, und

Simulieren, basierend auf dem zweiten Frequenzdifferenzsignal und dem zweiten Echosignal, des vierten Echosignals entsprechend dem MRR-Signal.

12. Vorrichtung nach einem der Ansprüche 9 bis 11, wobei das Verarbeitungsmodul ausgelegt ist zum:

Bestimmen der ersten Zwischenfrequenz basierend auf dem MRR-Signal und dem dritten Echosignal, wobei die erste Zwischenfrequenz eine Frequenzdifferenz zwischen dem MRR-Signal und dem dritten Echosignal ist;

Bestimmen der zweiten Zwischenfrequenz basierend auf dem MRR-Signal und dem vierten Echosignal, wobei die zweite Zwischenfrequenz eine Frequenzdifferenz zwischen dem MRR-Signal und dem vierten Echosignal ist; und

Durchführen einer Radarmessung basierend auf der ersten Zwischenfrequenz und der zweiten Zwischenfrequenz.

13. Vorrichtung nach einem der Ansprüche 8 bis 12, wobei die Frequenzspanne zwischen dem ersten LRR-Signal und dem zweiten LRR-Signal die folgende Formel erfüllt:

$$\Delta F = max(f_0, f_1, f_2, f_3) - min(f_0, f_1, f_2, f_3)$$

$\Delta F$ repräsentiert die Frequenzspanne zwischen dem ersten LRR-Signal und dem zweiten LRR-Signal, $f_0$, $f_1$ repräsentieren eine Startfrequenz bzw. eine Endfrequenz des ersten LRR-Signals, und $f_2$, $f_3$ repräsentieren eine Startfrequenz bzw. eine Endfrequenz des zweiten LRR-Signals.

14. Vorrichtung nach einem der Ansprüche 8 bis 12, wobei die Frequenzspanne zwischen dem ersten LRR-Signal und dem zweiten LRR-Signal die folgende Formel erfüllt:

$$\Delta F = max(f_1, f_3) - min(f_0, f_2)$$

ΔF repräsentiert die Frequenzspanne zwischen dem ersten LRR-Signal und dem zweiten LRR-Signal, $f_0$, $f_1$ repräsentieren eine Startfrequenz bzw. eine Endfrequenz des ersten LRR-Signals, und $f_2$, $f_3$ repräsentieren eine Startfrequenz bzw. eine Endfrequenz des zweiten LRR-Signals.

15. Computerlesbares Speichermedium, wobei das Speichermedium Computeranweisungen speichert und wobei, wenn die Computeranweisungen durch einen Computer ausgeführt werden, der Computer in die Lage versetzt wird, das Verfahren nach einem der Ansprüche 1 bis 7 durchzuführen, wenn mit einer Vorrichtung nach einem der Ansprüche 8 bis 14 gekoppelt.

**Revendications**

1. Procédé de mesure radar comprenant :

   la transmission, par un radar, d'un premier signal de radar à longue portée, LRR, et la réception d'un premier signal d'écho correspondant au premier signal LRR ;
   la transmission, par le radar, d'un second signal LRR, et la réception d'un second signal d'écho correspondant au second signal LRR, le premier signal LRR et le second signal LRR étant des ondes en dents de scie avec une augmentation linéaire de la fréquence ; et
   la simulation, par le radar, d'une mesure d'un radar à moyenne portée, MRR, sur la base du premier signal d'écho et du second signal d'écho, le radar générant le signal MRR et calculant séparément un premier signal de différence de fréquence ($\Delta f_1$) entre le premier signal LRR et le signal MRR, et un second signal de différence de fréquence ($\Delta f_2$) entre le second signal LRR et le signal MRR,
   l'obtention, par le radar, sur la base du premier signal d'écho et du premier signal de différence de fréquence ($\Delta f_1$), d'un troisième signal d'écho correspondant au signal MRR, et l'obtention, sur la base du deuxième signal d'écho et du deuxième signal de différence ($\Delta f_2$), d'un quatrième signal d'écho correspondant au signal MRR,
   l'obtention d'une fréquence intermédiaire IF1 sur la base du troisième signal d'écho et du signal MRR, et l'obtention d'une fréquence intermédiaire IF2 sur la base du quatrième signal d'écho et du signal MRR ;
   l'obtention, par le radar, d'une fréquence intermédiaire finale basée sur IF1 et IF2, et la réalisation d'une mesure radar basée sur la fréquence intermédiaire finale, une plage de fréquence ($\Delta F$) entre le premier signal LRR et le second signal LRR étant supérieure ou égale à une largeur de bande de fréquence de fonctionnement d'un signal MRR.

2. Procédé selon la revendication 1, la simulation, par le radar, d'une mesure d'un radar à moyenne portée, MRR sur la base du premier signal d'écho et du second signal d'écho comprenant :

   la génération, par le radar, d'un signal MRR ;
   la simulation, par le radar, sur la base du signal MRR, du premier signal LRR et du premier signal d'écho, du troisième signal d'écho correspondant au signal MRR ;
   la simulation, par le radar, sur la base du signal MRR, du deuxième signal LRR et du deuxième signal d'écho, du quatrième signal d'écho correspondant au signal MRR ; et
   la simulation, par le radar, de la mesure du radar à moyenne portée MRR sur la base du troisième signal d'écho et du quatrième signal d'écho.

3. Procédé selon la revendication 2, la simulation, par le radar sur la base du signal MRR, du premier signal LRR et du premier signal d'écho, d'un troisième signal d'écho correspondant au signal MRR comprenant :

   la détermination, par le radar, du premier signal de différence de fréquence entre le premier signal LRR et le signal MRR ; et
   la simulation, par le radar, sur la base du premier signal de différence de fréquence et du premier signal d'écho, du troisième signal d'écho correspondant au signal MRR.

4. Procédé selon la revendication 2, la simulation, par le radar sur la base du signal MRR, du deuxième signal LRR et du deuxième signal d'écho, du quatrième signal d'écho correspondant au signal MRR comprenant :

la détermination, par le radar, du deuxième signal de différence de fréquence entre le signal MRR et le deuxième signal LRR ; et

la simulation, par le radar, sur la base du deuxième signal de différence de fréquence et du deuxième signal d'écho, du quatrième signal d'écho correspondant au signal MRR.

5. Procédé selon l'une quelconque des revendications 2 à 4, la simulation, par le radar, de la mesure du radar à moyenne portée, MRR sur la base du troisième signal d'écho et du quatrième signal d'écho comprenant :

la détermination, par le radar, d'une première fréquence intermédiaire sur la base du signal MRR et du troisième signal d'écho, la première fréquence intermédiaire étant une différence de fréquence entre le signal MRR et le troisième signal d'écho ;

la détermination, par le radar, d'une deuxième fréquence intermédiaire sur la base du signal MRR et du quatrième signal d'écho, la deuxième fréquence intermédiaire étant une différence de fréquence entre le signal MRR et le quatrième signal d'écho ; et

la réalisation, par le radar, d'une mesure radar sur la base de la première fréquence intermédiaire et de la deuxième fréquence intermédiaire.

6. Procédé selon l'une quelconque des revendications 1 à 5, la plage de fréquence entre le premier signal LRR et le deuxième signal LRR satisfaisant la formule suivante :

$$\Delta F = \max(f_0, f_1, f_2, f_3) - \min(f_0, f_1, f_2, f_3)$$

$\Delta F$ représentant la plage de fréquences entre le premier signal LRR et le second signal LRR, $f_0$, $f_1$ représentant respectivement une fréquence de début et une fréquence de fin du premier signal LRR, et $f_2$, $f_3$ représentant respectivement une fréquence de début et une fréquence de fin du second signal LRR.

7. Procédé selon l'une quelconque des revendications 1 à 5, la plage de fréquence entre le premier signal LRR et le deuxième signal LRR satisfaisant la formule suivante :

$$\Delta F = \max(f_1, f_3) - \min(f_0, f_2)$$

$\Delta F$ représentant la plage de fréquences entre le premier signal LRR et le deuxième signal LRR, $f_0$, $f_1$ représentant respectivement une fréquence de début et une fréquence de fin du premier signal LRR, et $f_2$, $f_3$ représentant respectivement une fréquence de début et une fréquence de fin du deuxième signal LRR.

8. Appareil de mesure radar, comprenant :

un module de communication configuré pour transmettre un premier signal de radar à longue portée, LRR et recevoir un premier signal d'écho correspondant au premier signal LRR,

le module de communication étant en outre configuré pour transmettre un second signal LRR et recevoir un second signal d'écho correspondant au second signal LRR, le premier signal LRR et le second signal LRR étant des ondes en dents de scie avec une augmentation linéaire de la fréquence ; et

un module de traitement, configuré pour simuler une mesure d'un radar à moyenne portée, MRR, sur la base du premier signal d'écho et du second signal d'écho, le radar étant configuré pour générer le signal MRR et calculer séparément un premier signal de différence de fréquence ($\Delta f_1$) entre le premier signal LRR et le signal MRR, et un second signal de différence de fréquence ($\Delta f_2$) entre le second signal LRR et le signal MRR,

le radar étant configuré pour obtenir, sur la base du premier signal d'écho et du premier signal de différence de fréquence ($\Delta f_1$), un troisième signal d'écho correspondant au signal MRR, et pour obtenir, sur la base du deuxième signal d'écho et du deuxième signal de différence ($\Delta f_2$), un quatrième signal d'écho correspondant au signal MRR, le radar étant configuré pour obtenir une fréquence intermédiaire IF1 sur la base du troisième signal d'écho et du signal MRR, et pour obtenir une fréquence intermédiaire IF2 sur la base du quatrième signal d'écho et du signal MRR, et

le radar étant configuré pour obtenir une fréquence intermédiaire finale basée sur IF1 et IF2, et configuré pour effectuer une mesure radar basée sur la fréquence intermédiaire finale,

une plage de fréquences entre le premier signal LRR et le deuxième signal LRR étant supérieure ou égale à une largeur de bande de fréquence de fonctionnement d'un signal MRR.

**9.** Appareil selon la revendication 8, le module de traitement étant configuré pour :

générer un signal MRR ;
simuler, sur la base du signal MRR, du premier signal LRR et du premier signal d'écho, le troisième signal d'écho correspondant au signal MRR ;
simuler, sur la base du signal MRR, du deuxième signal LRR et du deuxième signal d'écho, le quatrième signal d'écho correspondant au signal MRR ; et
simuler la mesure du radar à moyenne portée MRR sur la base du troisième signal d'écho et du quatrième signal d'écho.

**10.** Appareil selon la revendication 9, le module de traitement étant configuré pour :

déterminer le premier signal de différence de fréquence entre le premier signal LRR et le signal MRR ; et
simuler, sur la base du premier signal de différence de fréquence et du premier signal d'écho, le troisième signal d'écho correspondant au signal MRR.

**11.** Appareil selon la revendication 9, le module de traitement étant configuré pour :

déterminer le deuxième signal de différence de fréquence entre le signal MRR et le deuxième signal LRR ; et
simuler, sur la base du deuxième signal de différence de fréquence et du deuxième signal d'écho, le quatrième signal d'écho correspondant au signal MRR.

**12.** Appareil selon l'une quelconque des revendications 9 à 11, le module de traitement étant configuré pour :

déterminer la première fréquence intermédiaire sur la base du signal MRR et du troisième signal d'écho, la première fréquence intermédiaire étant une différence de fréquence entre le signal MRR et le troisième signal d'écho ;
déterminer la deuxième fréquence intermédiaire sur la base du signal MRR et du quatrième signal d'écho, la deuxième fréquence intermédiaire étant une différence de fréquence entre le signal MRR et le quatrième signal d'écho ; et
réaliser une mesure radar sur la base de la première fréquence intermédiaire et de la deuxième fréquence intermédiaire.

**13.** Appareil selon l'une quelconque des revendications 8 à 12, la plage de fréquence entre le premier signal LRR et le deuxième signal LRR satisfaisant la formule suivante :

$$\Delta F = \max(f_0, f_1, f_2, f_3) - \min(f_0, f_1, f_2, f_3)$$

$\Delta F$ représentant la plage de fréquences entre le premier signal LRR et le second signal LRR, $f_0$, $f_1$ représentant respectivement une fréquence de début et une fréquence de fin du premier signal LRR, et $f_2$, $f_3$ représentant respectivement une fréquence de début et une fréquence de fin du second signal LRR.

**14.** Appareil selon l'une quelconque des revendications 8 à 12, la plage de fréquence entre le premier signal LRR et le deuxième signal LRR satisfaisant la formule suivante :

$$\Delta F = \max(f_1, f_3) - \min(f_0, f_2)$$

$\Delta F$ représentant la plage de fréquences entre le premier signal LRR et le deuxième signal LRR, $f_0$, $f_1$ représentant respectivement une fréquence de début et une fréquence de fin du premier signal LRR, et $f_2$, $f_3$ représentant respectivement une fréquence de début et une fréquence de fin du deuxième signal LRR.

**15.** Support de stockage lisible par ordinateur, le support de stockage stockant des instructions informatiques, et lorsque les instructions informatiques sont exécutées par un ordinateur, l'ordinateur étant capable de réaliser le procédé selon l'une quelconque des revendications 1 à 7, lorsqu'il est couplé à un appareil selon l'une quelconque des revendications 8 à 14.

Detection system 100

Radar 101

Detection target 102

FIG. 1

S201: A radar transmits a first LRR signal, and receives a first echo signal corresponding to the first LRR signal

S202: The radar transmits a second LRR signal, and receives a second echo signal corresponding to the second LRR signal

S203: The radar simulates a measurement of an MRR based on the first echo signal and the second echo signal

FIG. 2

FIG. 3

S401. A radar generates and transmits a first LRR signal in a time unit T, and generates and transmits a second LRR signal in a time unit T+1

S402. The radar generates an MRR signal, and separately calculates a first frequency difference signal between the first LRR signal and the MRR signal, and a second frequency difference signal between the second LRR signal and the MRR signal

S403. The radar receives a first echo signal corresponding to the first LRR signal, and a second echo signal corresponding to the second LRR signal

S404. The radar obtains, based on the first echo signal and the first frequency difference signal, a third echo signal corresponding to the MRR signal, and obtains, based on the second echo signal and the second frequency difference signal, a fourth echo signal corresponding to the MRR signal

S405. The radar obtains an intermediate frequency IF1 based on the third echo signal and the MRR signal, and obtains an intermediate frequency IF2 based on the fourth echo signal and the MRR signal

S406. The radar obtains a final intermediate frequency based on the intermediate frequency IF1 and the intermediate frequency IF2, and performs a radar measurement based on the final intermediate frequency

FIG. 4

FIG. 5

Radar 600

FIG. 6

FIG. 7

FIG. 8

Communications apparatus 900

Processor
901

Communications
interface
904

903

Memory 902

FIG. 9

Communications apparatus 1000

Communications
module 1001

Processing
module 1002

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102017206944 A1

- US 2018321368 A1

**Non-patent literature cited in the description**

- Multiband chirp synthesis for frequency-hopped FM-CW radar. **JASON YU et al.** SIGNALS, SYSTEMS AND COMPUTERS, 2009 CONFERENCE RECORD OF THE FORTY-THIRD ASILOMAR CONFERENCE ON. IEEE, 01 November 2009, 1315-1319

- **SIDNEY L BORISON et al.** Super-Resolution Methods for Wideband Radar. *The Lincoln Laboratory Journal,* 01 January 1992, vol. 5 (3), 441-461